# EUROPEAN PATENT APPLICATION

(11) **EP 1 473 892 A2**
(43) Date of publication of application: **03.11.2004**
(21) Application number: 04010107.3
(22) Date of filing: 28.04.2004
(51) Int. Cl.: H04L 12/56

(54) **Method of correcting real-time data, and bluetooth module**

(30) Priority: 02.05.2003 JP 2003127227; 19.04.2004 JP 2004122979
(71) Applicant: ALPS ELECTRIC CO., LTD., Tokyo 145-8501 (JP)
(72) Inventor: Sato, Shiro, Ota-Ku, Tokyo 145-8501 (JP)
(74) Representative: Klunker . Schmitt-Nilson . Hirsch

(57) **Abstract**

In a Bluetooth module, a host controller interface (HCI) first receives audio data packets from a synchronous connection oriented (SCO) link, and executes a process for detecting packet loss by monitoring the packet numbers of the audio data. When a packet loss has been detected, the HCI executes a correcting process for interpolating the lost portion so that analog signals of audio data packets before and after the lost packet will be connected smoothly. The audio data packets including the corrected packet corresponding to the lost packet portion is passed to a codec IC via the SCO link. The lost packet portion is not handled as zero level, but is instead corrected so that analog signals of audio data packets before and after the lost packet will be connected smoothly.

## Description

### BACKGROUND OF THE INVENTION

### 1. Field of the Invention

The present invention relates to methods of correcting real-time data such as audio signals (hereinafter simply referred to as audio signals or audio data) in Bluetooth modules, and to Bluetooth modules. More specifically, the present invention relates to a method of correcting an audio signal in a Bluetooth module, and also to a Bluetooth module, with which loss or the like of an audio signal received by the Bluetooth module can be corrected before the audio signal is output.

### 2. Description of the Related Art

A Bluetooth module usually includes an RF transceiver IC, a baseband IC, and an SCO (synchronous connection oriented) link (hereinafter simply referred to as an SCO) that is used for applications requiring real-time property, such as audio applications. The Bluetooth module, when an audio signal has been received by the RF transceiver, processes the received audio signal by the baseband IC, and outputs the resulting signal to an external codec IC via the SCO link.

The SCO link, however, when audio data processed by the baseband IC has been transferred thereto, simply outputs the audio data as it is to the codec IC. Thus, when a packet loss or the like has occurred in the audio data, an analog signal output from the codec IC include noise.

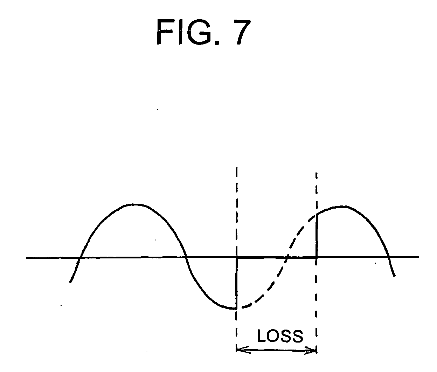

Fig. 7 is a diagram for explaining noise included in an analog signal output from the codec IC when a packet loss or the like has occurred in audio data.

When a packet loss has occurred in an audio signal passed from the SCO to the codec IC, an analog signal output from the codec IC has a waveform in which the portion corresponding to the lost packet is missing, as shown in Fig. 7. The level of the analog signal at the lost portion is usually treated as zero level. Thus, the lost portion becomes noise, causing discomfort for a user who listens to it.

As related art that allows exchanging data in the form of packet data, for example, techniques disclosed in Japanese Unexamined Patent Application Publication No. 2000-134370 are known. As related art relating to Bluetooth modules, for example, techniques disclosed in Kazuhiro Miyazu, "Bluetooth Guide book" (Nikkan Kogyo Shinbunsha, September 20, 2000, pp. 68 to 78) are known.

In the processing of audio signals by the Bluetooth module according to the related art described above, when audio data processed by the baseband IC has been transferred to the SCO link, the SCO link simply outputs the audio data as it is to the codec IC. Thus, when a packet loss or the like has occurred in the audio data, an analog signal output from the codec IC includes noise.

### SUMMARY OF THE INVENTION

Accordingly, it is an object of the present invention to overcome the problem of the related art described above, and to provide a method of correcting an audio signal in a Bluetooth module, and also a Bluetooth module, with which packet loss in audio data received by an RF transceiver and processed by a baseband IC can be detected and the lost portion can be corrected in the Bluetooth module before the audio data is passed to a codec IC.

The present invention, in one aspect thereof, provides A method of correcting real-time data in a Bluetooth module including a serial connection oriented link and a host controller interface, wherein the host controller interface detects loss of a packet in real-time data received, and wherein the host controller interface, when loss of a packet has occurred, performs correction so that analog signals of real-time data packets before and after the lost packet will be connected smoothly, outputting corrected real-time information via the serial connection oriented link.

In the method of correcting real-time data in a Bluetooth module, loss of a packet may be detected by monitoring packet numbers of the real-time data.

The present invention, in another aspect thereof, provides a method of correcting real-time data in a Bluetooth module including a serial connection oriented link, a host controller interface, a digital signal processor, a baseband processor, and a data processor provided as an application, wherein the baseband processor detects loss of a packet in real-time data received, identifies the lost packet, and reports that the lost packet has been identified to the data processor via the host controller interface, wherein the data processor sequentially passes real-time data packets received via the host controller interface to the digital signal processor, and instructs the digital signal processor to perform interpolation for the lost packet, and wherein the digital signal processor performs correction so that analog signals of real-time data packets before and after the lost packet will be connected smoothly, and outputs corrected real-time information via the serial connection oriented link.

In the method of correcting real-time data, loss of a real-time data packet may be detected by monitoring, using a timer, whether real-time data packets arrive at an expected time interval.

Furthermore, in the method of correcting real-time data, the timer may be a Bluetooth timer that is used for managing synchronization of communication.

The present invention, in another aspect thereof, provides a Bluetooth module including a serial connection oriented link and a host controller interface, the Bluetooth module outputting received real-time data via the serial connection oriented link, wherein the host controller interface comprises a unit for detecting loss of a packet in real-time data received, and a unit for performing correction when loss of a packet has occurred so that analog signals of real-time data packets before and after the lost packet will be connected smoothly.

The present invention, in another aspect thereof, provides a Bluetooth module including a serial connection oriented link, a host controller interface, a digital signal processor, a baseband processor, and a data processor provided as an application, wherein the baseband processor includes a unit for detecting loss of a packet in real-time data received and for identifying the lost packet, and a unit for reporting that the lost packet has been identified to the data processor via the host controller interface, wherein the data processor includes a unit for sequentially passing real-time data packets received via the host controller interface to the digital signal processor and for instructing the digital signal processor to perform interpolation for the lost packet, and wherein the digital signal processor includes a unit for performing correction so that analog signals of real-time data packets before and after the lost packet will be connected smoothly, and a unit for outputting corrected real-time information via the serial connection oriented link.

According to the present invention, in a Bluetooth module, packet loss in received audio data is detected and the lost portion is corrected before the audio data is passed to a codec IC.

### BRIEF DESCRIPTION OF THE DRAWINGS

Fig. 1 is a block diagram showing the basic configuration of a Bluetooth module according to an embodiment of the present invention;
Fig. 2A is a diagram for explaining a method of correcting an audio signal according to the embodiment;
Fig. 2B is a diagram showing an example of corrected waveform according to the embodiment;
Fig. 3 is a diagram for explaining a method according to another embodiment of the present invention, in which a packet-loss detecting process and a correcting process are assigned to an application and a digital signal processor, respectively;
Fig. 4 is a diagram for explaining transmission of audio data packets based on Bluetooth;
Fig. 5 is a diagram for explaining why it is difficult to detect a packet loss by a data processor provided as an application;
Fig. 6 is a diagram for explaining how the data processor identifies a lost packet reliably in the embodiment; and
Fig. 7 is a diagram for explaining noise included in an analog signal output from a codec IC when a packet loss or the like has occurred in audio data.

### DESCRIPTION OF THE PREFERRED EMBODIMENTS

Now, a method of correcting an audio signal in a Bluetooth module according to an embodiment of the present invention will be described in more detail with reference to the drawings.

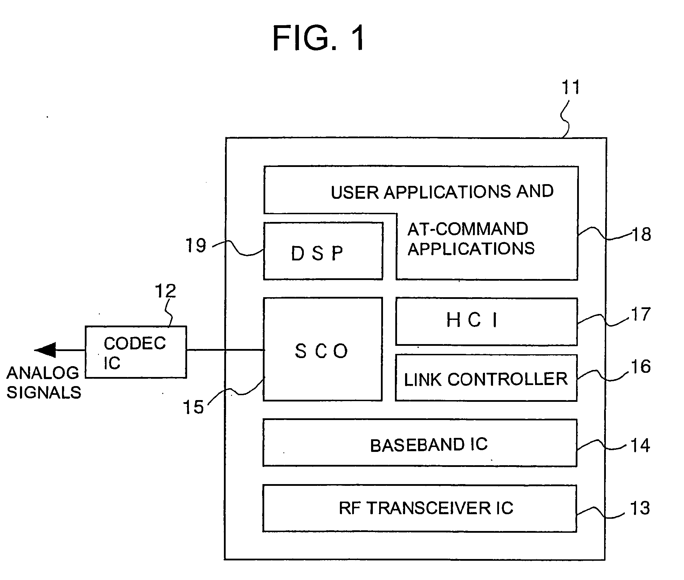

Fig. 1 is a block diagram showing the basic configuration of a Bluetooth module according to an embodiment of the present invention. Referring to Fig. 1, a Bluetooth module 11 includes an RF transceiver IC 13, a baseband IC 14, an SCO 15, a link controller 16, a host controller interface (HCI) 17, applications 18 including user applications and AT command applications, and a digital signal processor (DSP) 19. Furthermore, a codec IC 12 is provided externally to the Bluetooth module 11. This configuration is disclosed in detail in, for example, Kazuhiro Miyazu, "Bluetooth Guide book" (Nikkan Kogyo Shinbunsha, September 20, 2000, pp. 68 to 78) mentioned earlier, so that description thereof will be omitted.

As described earlier, packetized audio data transmitted to the Bluetooth module 11 is received by the RF transceiver IC 13, then undergoes processing in the baseband IC 14, and the resulting data is passed to the SCO 15. In the case of the related art, the audio data passed to the SCO 15 is passed as it is to the codec IC 12 provided externally to the Bluetooth module 11, via a serial-peripheral interface.

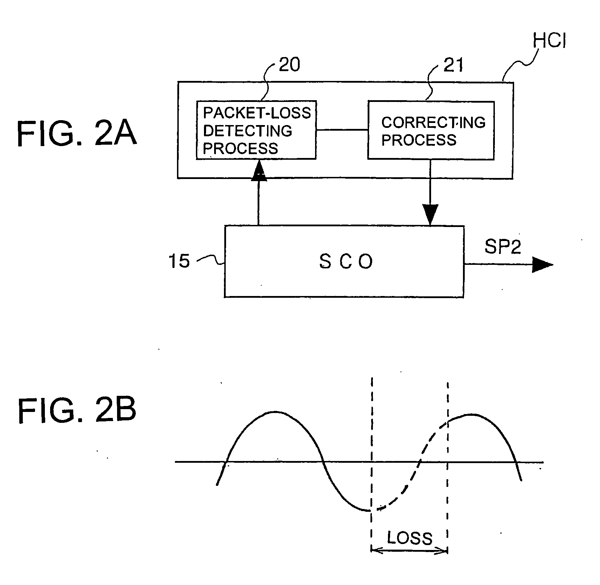

Fig. 2A is a diagram for explaining a method of correcting an audio signal according to this embodiment. Referring to Fig. 2A, the HCI 17 first receives audio data packets from the SCO 15, and executes a process 20 for detecting packet loss by monitoring packet numbers of the audio data. If a packet loss is detected, the HCI 17 executes a correcting process 21 for interpolating the lost portion so that analog signals of audio data packets before and after the lost packet will be connected smoothly. Then, audio data packets including the corrected packet corresponding to the lost packet portion are passed to the codec IC 12 via the SCO 15.

Fig. 2B is a diagram showing an example of corrected waveform according to this embodiment. In Fig. 2B, the waveform of an analog signal formed by the codec IC 12 is shown. The lost portion of the packet is corrected so that analog signals of audio data packets before and after the lost packet will be connected smoothly, as opposed to the related art in which a lost packet portion is handled as zero level. Accordingly, a user who listens to the sound does not feel a sense of noise or a sense of distortion.

According to the above-described embodiment of the present invention, when a loss has occurred in audio data packets received by the Bluetooth module 11, the HCI 17 included in the Bluetooth module 11 performs correction so that analog signals of audio data packets before and after the lost packet will be connected smoothly. Accordingly, a user who listens to the sound does not feel a sense of noise or a sense of distortion.

According to the embodiment described above, when a loss has occurred in an audio data packet received by the Bluetooth module 11, a correction is performed using the HCI 17 so that analog signals of audio data packets before and after the lost packet will be connected smoothly. In order to implement functions for the packet-loss detecting process 20 and the correcting process 21 in the HCI 17, however, the hardware and software configurations of the HCI 17 must be changed. According to the present invention, the packet-loss detecting process 20 can be assigned to the application 18 and the correcting process 21 can be assigned to the DSP 19, so that audio signals can be corrected only by changing software.

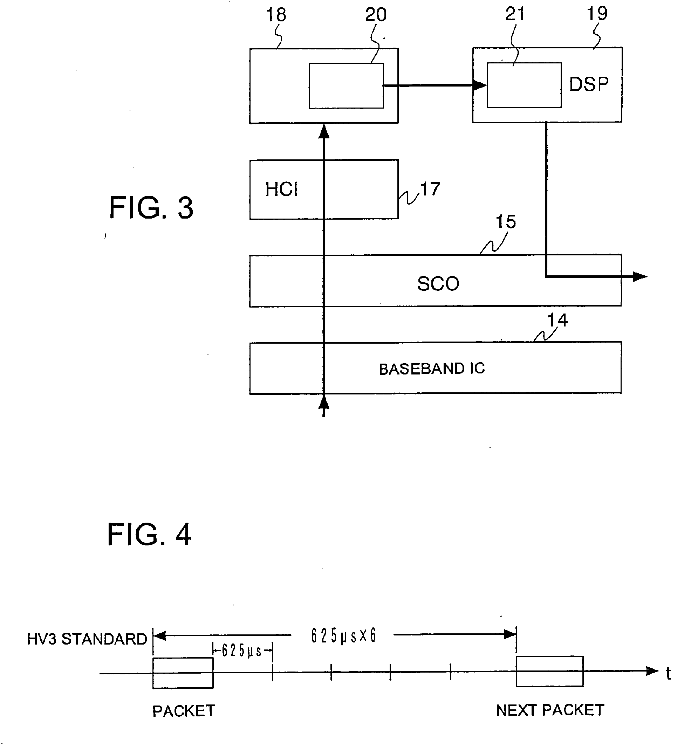

Fig. 3 is a diagram for explaining another method according to the present invention, in which a packet-loss detecting process and a correcting process are assigned to an application and a DSP, respectively.

In the example shown in Fig. 3, packetized audio data transmitted to the Bluetooth module 11 is received by the RF transceiver IC 13, and is processed by the baseband IC 14, and the resulting data is passed to the SCO 15. Furthermore, the packetized audio data is passed from the SCO 15 to the application 18 via the HCI 17. The application 18, by a data processor provide as an application, executes a packet-loss detecting process 20 for detecting loss of an audio data packet by a method described later, and continues processing for passing received packets to the DSP 19. If a packet loss is detected, the application 18 also passes an instruction for correction relating to the loss to the DSP 19. The DSP 19 executes the correcting process 21 for interpolating the lost portion so that analog signals of audio data packets before and after the lost packet will be connected smoothly. Then, audio data packets including the corrected packet corresponding to the lost packet portion are passed to the SCO 15 and are then passed to the codec IC 12 via an audio output unit of the SCO 15 and an SPI.

As described earlier, an example waveform of analog signals obtained by the codec IC 12 is shown in Fig. 2B. The lost portion of the packet is corrected so that analog signals of audio data packets before and after the lost packet will be connected smoothly, as opposed to the related art in which a lost packet portion is handled as zero level. Accordingly, a user who listens to the sound does not feel a sense of noise or a sense of distortion.

In exchanging Bluetooth packets, the loss of audio data packets described above occurs when reception of a packet fails due to the lack of retransmission function. In order to correct the loss by interpolation or the like, the packet loss must be detected. When the packet loss is detected by a data processor provided as an application as in the example described with reference to Fig. 3, the interval of reception of audio data packets is monitored using a timer to detect the presence or absence of loss.

In the example described with reference to Fig. 3, a delay in time occurs before audio data packets processed in the baseband IC 14 are passed to the data processor of the application 18 via the SCO 15 and the HCI 17. When the packet loss is detected through processing by software in the data processor, it is sometimes difficult to identify the lost packet. The following describes, with reference to the drawing, why it is difficult to detect a packet loss by the data processor, and a method of solving the problem according to the present invention.

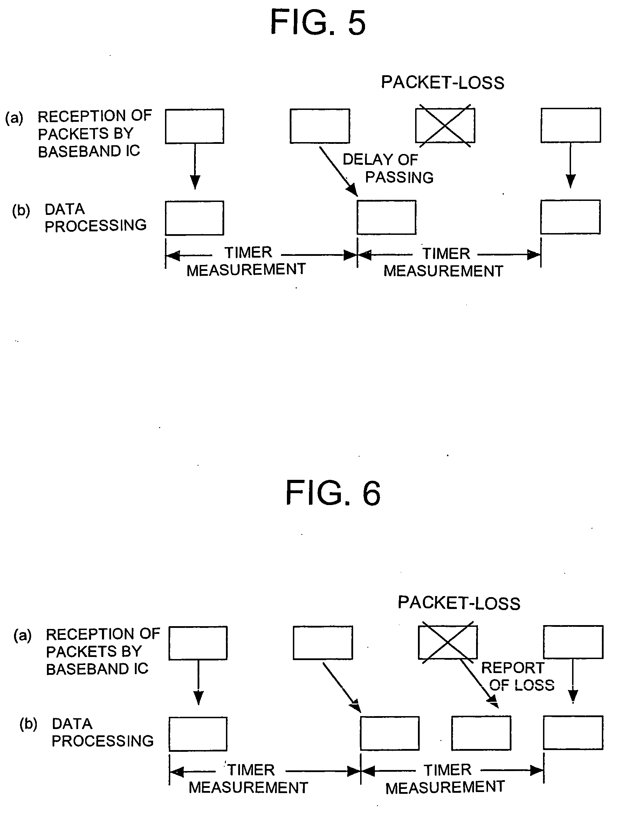

Fig. 4 is a diagram for explaining transmission of audio data packets based on Bluetooth. Fig. 5 is a diagram for explaining why it is difficult to detect a packet loss by a data processor provided as an application.

Fig. 4 shows an example of transmission of audio data packets based on Bluetooth according to the HV3 Standard. As shown in Fig. 4, each slot has a length of 625 µs, and the slots are used alternately for transmission and reception of packets. According to the HV3 Standard, when an audio data packet is transmitted in one slot (usually referred to as an SCO packet), the next audio data packet is transmitted in the sixth subsequent slot.

The audio data packets transmitted as described above are received by the baseband IC 14 at an interval of 625 µs × 6 = 3,750 µs, as shown in part (a) in Fig. 5. The received audio data packets are passed to the data processor provided as an application, possibly with a delay as described earlier. In the example shown in part (a) in Fig. 5, four audio data packets arrive at the baseband IC 14 with the third packet lost. As shown in part (b) in Fig. 5, the second packet is passed to the data processor with a delay.

The baseband IC 14 checks whether audio data packets arrive at an interval of 3,750 µs using a Bluetooth timer. Furthermore, the data processor provided as an application checks whether audio data packets arrive at an interval of 3,750 µs using its own timer. However, in the situation described above, that is, when the second packet is delayed and the third packet is lost, it is difficult for the data processor to determine whether the audio data packet arrived with a delay is the second packet or the third packet. Thus, it could occur, for example, that the data processor incorrectly determines that the audio data packet expected to arrive second is lost and that the audio data packet arrived with a delay is the third packet. When the lost packet is identified incorrectly as described above, it is meaningless to perform interpolation by the DSP 19. Thus, a sound output from the codec IC 12 causes a sense of noise or a sense of distortion for the user who listens to the sound.

According to this embodiment, even when an audio data packet is passed from the baseband IC 14 to the data processor of the application 18 with a delay, a lost packet is correctly identified in the data processor. Now, a method for achieving this will be described.

Fig. 6 is a diagram for explaining a method for allowing the data processor to identify a lost packet according to this embodiment.

Similarly to the example described earlier, the baseband IC 14 monitors whether audio data packets arrive at an interval of 8,750 µs using a Bluetooth timer that is used for managing synchronization of communication. Since audio data packets are processed only by hardware in the RF transceiver 13 before arriving at the baseband IC 14, the audio data packets arrive at the baseband IC without a delay. Thus, the baseband IC 14 reliably detects loss of an audio data packet. Now, let it be supposed that the third audio data packet is lost, as shown in part (a) in Fig. 6. In this case, the baseband IC 14 reports the loss of the packet to the data processor.

Thus, even when the second audio data packet arrives at the data processor with a delay as shown in part (b) in Fig. 6, since the packet loss is reported to the data processor next to the audio data packet arrived with a delay, the data processor receives audio data packets while maintaining the total number and order of packets received and report of lost packet. Thus, the data processor is readily allowed to determine which packet of audio data is lost.

According to this embodiment, by the method described above, incorrect identification of a lost packet is prevented. Thus, the DSP 19 always performs interpolation for a lost packet that has been identified correctly. Accordingly, a sound output from the codec IC 12 does not cause a sense of noise or a sense of distortion for the user who listens to the sound.

Although the embodiment of the present invention has been described in the context of correcting loss of audio data, the present invention can be applied to correction of other real-time data that requires real-time property, such as moving-picture data, without limitation to audio data.

## Claims

1. A method of correcting real-time data in a Bluetooth module including a serial connection oriented link and a host controller interface, wherein the host controller interface detects loss of a packet in real-time data received, and wherein the host controller interface, when loss of a packet has occurred, performs correction so that analog signals of real-time data packets before and after the lost packet will be connected smoothly, outputting corrected real-time information via the serial connection oriented link.

2. A method of correcting real-time data according to Claim 1, wherein loss of a packet is detected by monitoring packet numbers of the real-time data.

3. A method of correcting real-time data in a Bluetooth module including a serial connection oriented link, a host controller interface, a digital signal processor, a baseband processor, and a data processor provided as an application, wherein the baseband processor detects loss of a packet in real-time data received, identifies the lost packet, and reports that the lost packet has been identified to the data processor via the host controller interface, wherein the data processor sequentially passes real-time data packets received via the host controller interface to the digital signal processor, and instructs the digital signal processor to perform interpolation for the lost packet, and wherein the digital signal processor performs correction so that analog signals of real-time data packets before and after the lost packet will be connected smoothly, and outputs corrected real-time information via the serial connection oriented link.

4. A method of correcting real-time data according to Claim 3, wherein loss of a real-time data packet is detected by monitoring, using a timer, whether real-time data packets arrive at an expected time interval.

5. A method of correcting real-time data according to Claim 4, wherein the timer is a Bluetooth timer that is used for managing synchronization of communication.

6. A Bluetooth module comprising a serial connection oriented link and a host controller interface, the Bluetooth module outputting received real-time data via the serial connection oriented link, wherein the host controller interface comprises means for detecting loss of a packet in real-time data received, and means for performing correction when loss of a packet has occurred so that analog signals of real-time data packets before and after the lost packet will be connected smoothly.

7. A Bluetooth module comprising a serial connection oriented link, a host controller interface, a digital signal processor, a baseband processor, and a data processor provided as an application, wherein the baseband processor comprises means for detecting loss of a packet in real-time data received and for identifying the lost packet, and means for reporting that the lost packet has been identified to the data processor via the host controller interface, wherein the data processor comprises means for sequentially passing real-time data packets received via the host controller interface to the digital signal processor and for instructing the digital signal processor to perform interpolation for the lost packet, and wherein the digital signal processor comprises means for performing correction so that analog signals of real-time data packets before and after the lost packet will be connected smoothly, and means for outputting corrected real-time information via the serial connection oriented link.
